# DEMANDE DE BREVET EUROPEEN

(11) **EP 4 029 416 A1**
(43) Date de publication de la demande: **20.07.2022**
(21) Numéro de dépôt: 21315005.5
(22) Date de dépôt: 13.01.2021
(51) Int. Cl.: A47J 31/06

(54) **INFUSEUR AMOVIBLE À THÉ OU AUTRE PLANTE POUR INFUSION APTE ET DESTINÉ À ÉQUIPER UN RÉCIPIENT INFUSEUR ET RÉCIPIENT INFUSEUR ÉQUIPÉ D'UN INFUSEUR**

(71) Demandeur: ARB (Société par Actions Simplifiée), 67450 MUNDOLSHEIM (FR)
(72) Inventeur: Feugueur, Marc, 67870 Bischoffsheim (FR); Hausser, Joël, 67870 Griesheim-Pres-Molsheim (FR)
(74) Mandataire: Cabinet Nuss

(57) **Abrégé**

Infuseur amovible à thé ou autre plante pour infusion apte et destiné à équiper un récipient infuseur et récipient infuseur équipé d'un tel infuseur.

La présente invention a pour objet un infuseur amovible à thé ou autre plante pour infusion apte et destiné à équiper un récipient infuseur comprenant un corps principal (1, 2) creux et perforé, préférentiellement de forme cylindrique, s'étendant le long d'un axe longitudinal (X) entre deux extrémités principales opposées (1a, 2a) reliées entre elles par une paroi latérale (1b, 2b), la première extrémité principale (1a) étant ouverte pour permettre l'insertion de la plante à infuser dans l'espace interne dudit corps principal (1, 2) et la deuxième extrémité principale (2a) étant fermée par un fond (20a) permettant de retenir ladite plante dans ledit corps principal (1, 2).

Le corps principal (1, 2) comprend une liaison (1c, 2c ; 1d, 2d) démontable et est constitué de deux parties (1, 2) assemblées l'une à l'autre de manière démontable, grâce à ladite liaison, au niveau d'une jonction (L) située entre lesdites première et deuxième extrémités principales, ladite liaison comprenant un premier moyen de liaison (1c ; 1d) et un deuxième moyen de liaison (2c; 2d) coopérant mutuellement par contact, la première partie (1) comprenant la première extrémité principale et, du côté opposé à cette dernière, une extrémité de liaison mâle ou femelle comprenant le premier moyen de liaison, la deuxième partie (2) comprenant la deuxième extrémité principale et, du côté opposé à cette dernière, une extrémité de liaison et d'emboîtement (2e) mâle ou femelle comprenant le deuxième moyen de liaison. Elle a également pour objet un récipient infuseur équipé d'un tel infuseur.

## Description

La présente invention concerne le domaine des appareils à préparer les boissons et plus particulièrement des accessoires pour l'infusion du thé ou autre plante pour infusion et a pour objet un infuseur amovible à thé apte et destiné à équiper un récipient infuseur. Elle a également pour objet un récipient infuseur équipé d'un tel infuseur amovible.

L'infusion du thé s'effectue traditionnellement en dispersant librement les feuilles de thé dans un récipient contenant de l'eau chauffée.

On connait également des infuseurs amovibles à thé qui concentrent les feuilles de thé dans une cage, ou un compartiment, métallique perforée ou maillée, immergée dans l'eau contenu dans un récipient, dit récipient infuseur, alors équipé d'un tel infuseur amovible. Le thé se diffuse dans l'eau au travers des perforations.

L'infuseur amovible est configuré pour être enlevé ou remis à volonté dans ledit récipient, notamment en étant suspendu dans ce dernier et est généralement à cet effet muni d'un système de préhension.

L'intérêt d'un tel infuseur amovible est qu'il permet de retirer facilement les feuilles à la fin de l'infusion, de sorte à éviter la sur-infusion nuisible à la dégustation.

Certains infuseurs amovibles connus se présentent sous la forme d'une boule creuse dont la forme arrondie offre la plus grande surface disponible avec l'eau.

D'autres infuseurs amovibles connus se présentent sous une forme cylindrique et comprennent un corps cylindrique creux et ouvert à l'une de ses extrémités pour permettre l'insertion et la mise en place des feuilles dans ledit corps cylindrique. Le corps cylindrique est fermé à son autre extrémité, opposée à son extrémité ouverte, par un fond permettant de retenir lesdites feuilles dans ledit corps cylindrique. Un tel infuseur amovible est utilisé en étant positionné verticalement dans un récipient tel qu'un pichet contenant de l'eau chaude ou froide suivant la boisson à préparer. Le fond et la paroi cylindrique du corps cylindrique sont perforés pour permettre à l'eau de pénétrer dans ledit corps cylindrique et de venir au contact des feuilles de thé afin de réaliser l'infusion. En outre, de tels infuseurs amovibles comprennent généralement un couvercle de fermeture de leur extrémité ouverte.

Les perforations du corps cylindrique et du fond sont usuellement très fines, de l'ordre de quelques dixièmes de mm, afin d'éviter le transfert de brisures de feuilles de thé dans le liquide infusé contenu dans le récipient. Les perforations sont réparties de façon uniforme sur la hauteur du corps cylindrique et sur le fond afin d'optimiser le transfert vers le liquide infusé dans le récipient.

Le diamètre et la hauteur du corps cylindrique d'un tel infuseur amovible dépendent de la forme et de la contenance du récipent. Généralement le corps cylindique de l'infuseur amovible présente un diamètre de l'ordre de 6 cm pour une hauteur de l'ordre de 15 cm.

Toutefois, avec ces infuseurs amovibles, un problème se pose lors de leur nettoyage après chaque infusion, notamment après leur retrait du récipient infuseur. En effet, cette opération de nettoyage requiert l'évacuation des feuilles et brisures de thé qui se retrouvent entassées ou concentrées sur le fond. Or, cette évacuation n'est possible qu'à travers l'ouverture située à l'opposé dudit fond, ce qui la rend difficile notamment lorsque la hauteur de l'infuseur amovible est très supérieure à son diamètre et que par conséquent l'ouverture est très éloignée du fond avec un espace réduit en largeur les séparant. En outre, le nettoyage n'est pas facilité par la surface perforée et les feuilles de thé mouillées qui viennent colmater les perforations ou adhérer ou coller aux parois internes.

La présente invention a pour but de pallier ces inconvénients en proposant un infuseur amovible à thé ou autre plante pour infusion apte et destiné à équiper un récipient infuseur et permettant de faciliter les opérations de nettoyage dudit infuseur amovible, notamment après son retrait dudit récipient infuseur.

A cet effet, l'infuseur amovible, selon la présente invention, à thé ou autre plante pour infusion apte et destiné à équiper un récipient infuseur, ledit infuseur comprenant un corps principal creux et perforé, préférentiellement de forme cylindrique, s'étendant le long d'un axe longitudinal entre deux extrémités principales opposées dudit corps principal, à savoir une première extrémité principale et une deuxième extrémité principale, reliées entre elles par une paroi latérale, la première extrémité principale étant ouverte par une ouverture permettant l'insertion d'au moins une plante à infuser dans l'espace interne dudit corps principal et la deuxième extrémité principale étant fermée par un fond permettant de retenir ladite plante dans ledit corps principal, se caractérise essentiellement en ce que ledit corps principal comprend une liaison démontable et est constitué de deux parties, à savoir une première partie et une deuxième partie, assemblées l'une à l'autre de manière démontable, grâce à ladite liaison, au niveau d'une jonction située entre lesdites première et deuxième extrémités principales, ladite liaison comprenant un premier moyen de liaison et un deuxième moyen de liaison coopérant mutuellement par contact et en ce que, d'une part, la première partie comprend ladite première extrémité principale et, du côté opposé à cette dernière, une extrémité de liaison et d'emboîtement mâle ou femelle, dite première extrémité de liaison et d'emboîtement, comprenant le premier moyen de liaison et, d'autre part, la deuxième partie comprend ladite deuxième extrémité principale et, du côté opposé à cette dernière, une extrémité de liaison et d'emboîtement mâle ou femelle, dite deuxième extrémité de liaison et d'emboîtement, comprenant le deuxième moyen de liaison, lesdites première et deuxième extrémités de liaison et d'emboîtement étant complémentaires et emboîtées l'une dans l'autre.

La présente invention a également pour objet un récipient infuseur équipé d'un infuseur à thé ou autre plante pour infusion, ledit récipient comprenant un récipient et un infuseur amovible, caractérisé en ce que ledit infuseur amovible est un infuseur amovible selon la présente invention.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

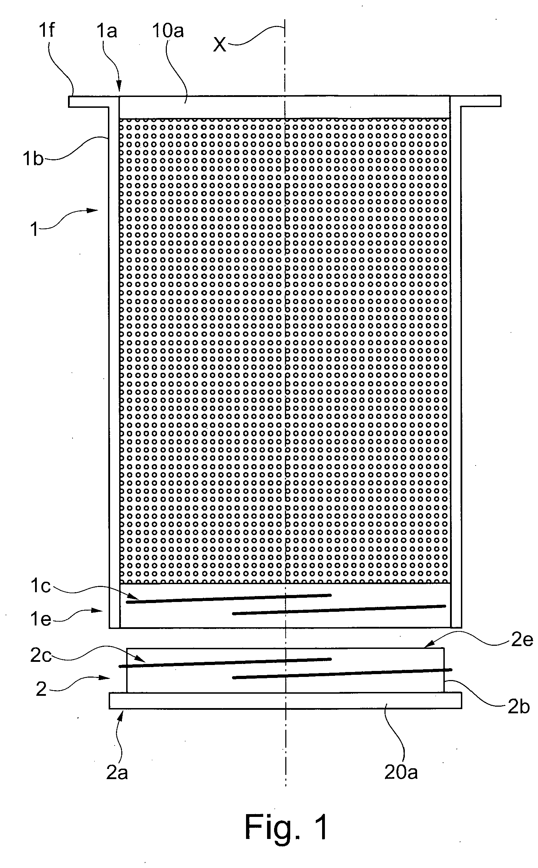

[Fig. 1] représente une vue en coupe longitudinale d'un infuseur amovible selon la présente invention, à l'état démonté des deux parties constituant le corps principal, dans un mode de réalisation de la liaison par vissage selon une première forme de réalisation et dans forme de réalisation où la jonction est située à proximité immédiate de la deuxième extrémité principale munie du fond,

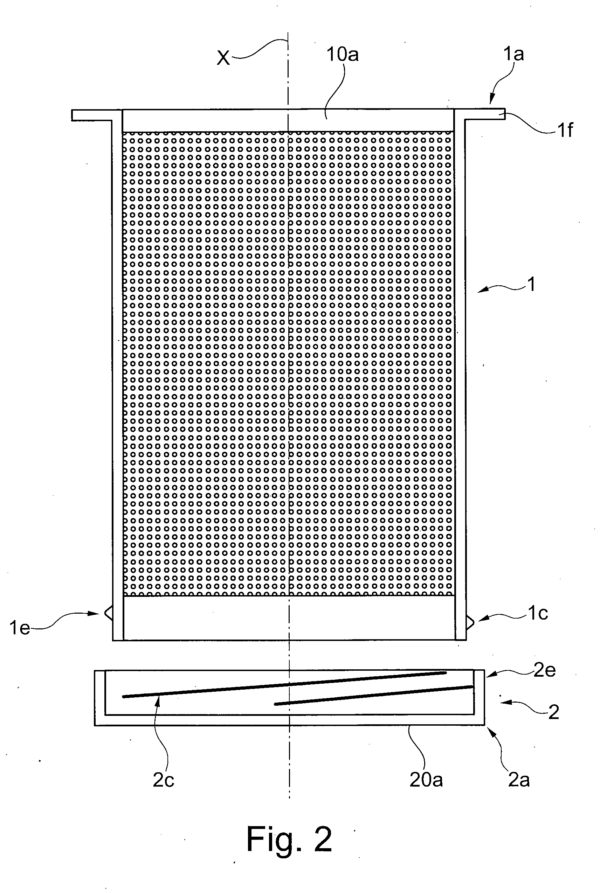

[Fig. 2] représente une vue en coupe longitudinale d'un infuseur amovible selon la présente invention, à l'état démonté des deux parties constituant le corps principal, dans un mode de réalisation de la liaison par vissage selon une deuxième forme de réalisation et dans forme de réalisation où la jonction est située à proximité immédiate de la deuxième extrémité principale munie du fond,

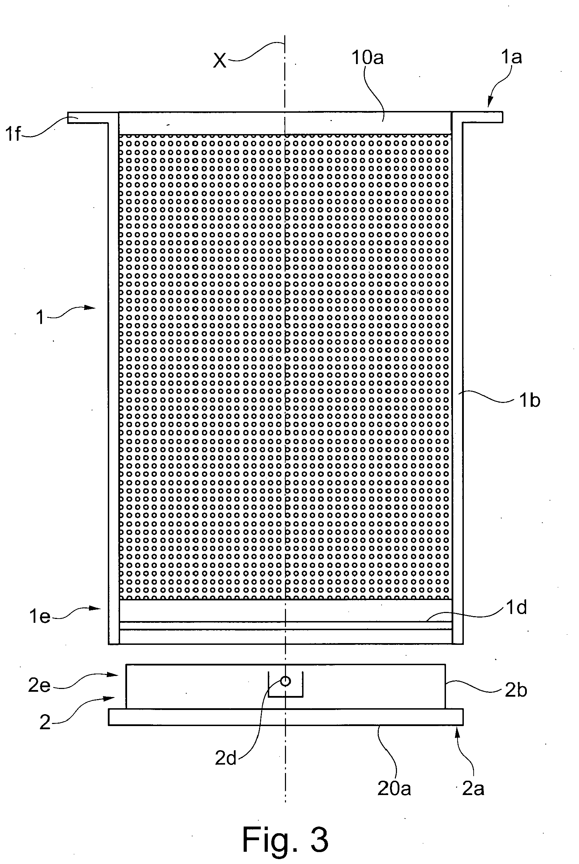

[Fig. 3] représente une vue en coupe longitudinale d'un infuseur amovible selon la présente invention dans un mode de réalisation de la liaison par encliquetage, à l'état démonté des deux parties constituant le corps principal, dans une forme de réalisation où la jonction est située à proximité immédiate de la deuxième extrémité principale munie du fond,

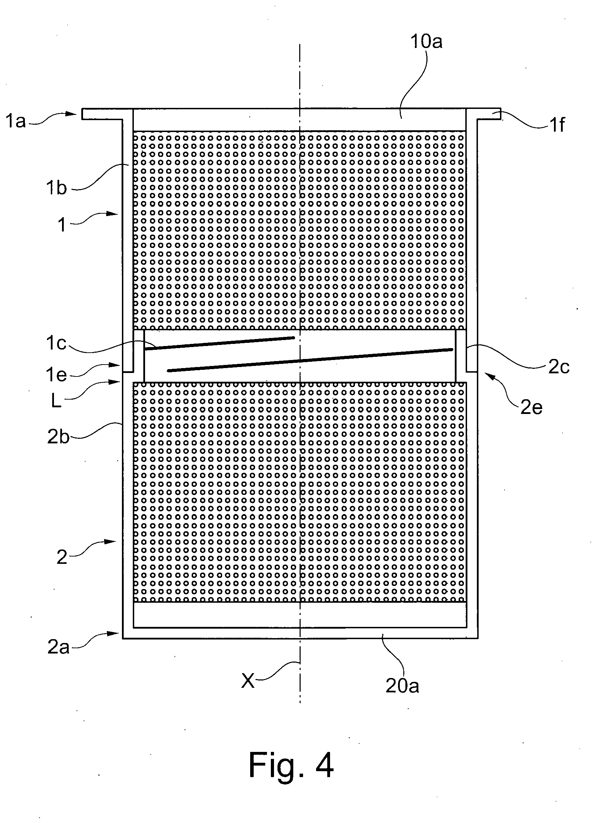

[Fig. 4] représente une vue en coupe longitudinale d'un infuseur amovible selon la présente invention dans un mode de réalisation de la liaison par vissage et dans une forme de réalisation où la jonction est située à mi-hauteur entre la première extrémité principale ouverte et la deuxième extrémité principale munie du fond,

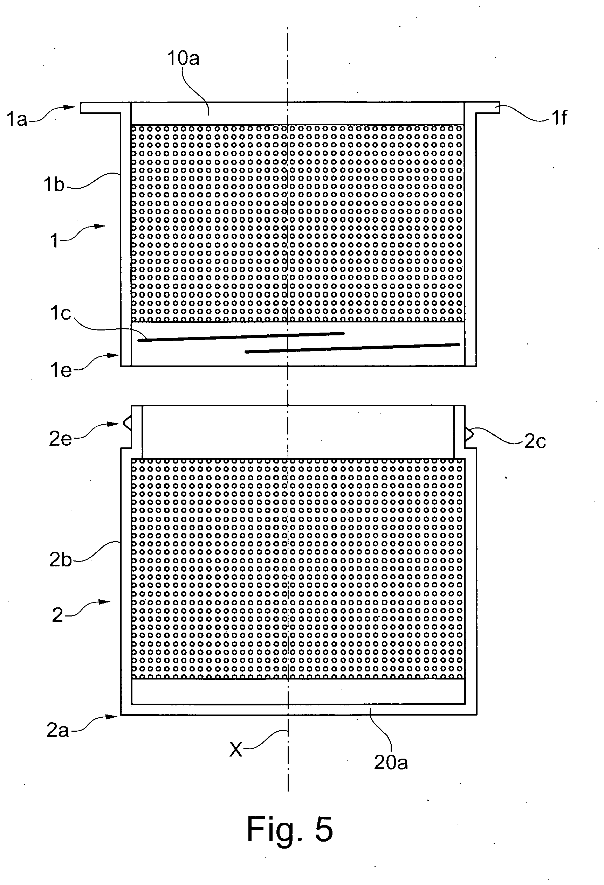

[Fig. 5] montre l'infuseur amovible représenté sur la figure 4 à l'état démonté ou divisé des deux parties constituant le corps principal de l'infuseur,

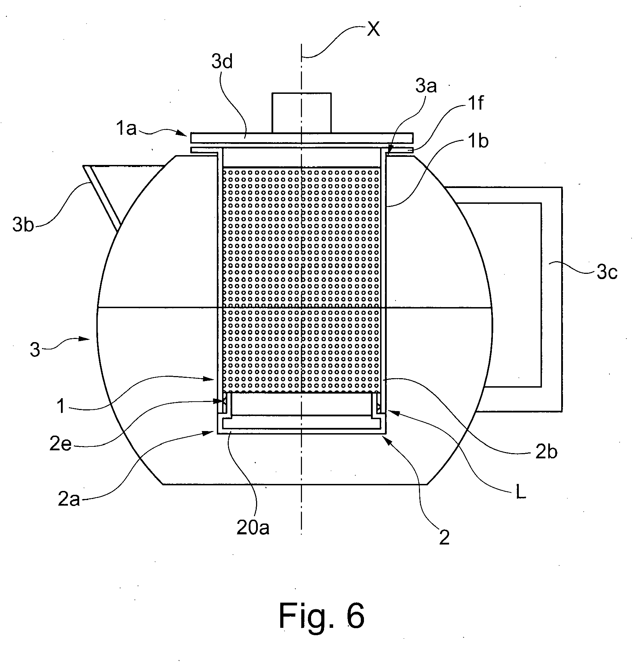

[Fig. 6] représente une vue en coupe longitudinale d'un récipient infuseur équipé d'un infuseur amovible, selon la présente invention.

Les figures 1 à 6 montrent un infuseur amovible à thé ou autre plante pour infusion apte et destiné à équiper un récipient infuseur, ledit infuseur comprenant un corps principal 1, 2 creux et perforé, préférentiellement de forme cylindrique, s'étendant le long d'un axe longitudinal X entre deux extrémités principales opposées 1a, 2a dudit corps principal 1, 2, à savoir une première extrémité principale 1a et une deuxième extrémité principale 2a, reliées entre elles par une paroi latérale 1b, 2b, la première extrémité principale 1a étant ouverte par une ouverture 10a permettant l'insertion de la plante à infuser dans l'espace interne dudit corps principal 1, 2 et la deuxième extrémité principale 2a étant fermée par un fond 20a permettant de retenir ladite plante dans ledit corps principal 1, 2.

Conformément à la présente invention, dans un tel infuseur amovible, ledit corps principal 1, 2 comprend une liaison 1c, 2c; 1d, 2d démontable et est constitué de deux parties 1, 2, à savoir une première partie 1 et une deuxième partie 2, assemblées l'une à l'autre de manière démontable, grâce à ladite liaison 1c, 2c; 1d, 2d, au niveau d'une jonction L située entre lesdites première et deuxième extrémités principales 1a, 2a, ladite liaison 1c, 2c ; 1d, 2d comprenant un premier moyen de liaison 1c; 1d et un deuxième moyen de liaison 2c; 2d coopérant mutuellement par contact.

Toujours conformément à la présente invention, d'une part, la première partie 1 comprend ladite première extrémité principale 1a et, du côté opposé à cette dernière, une extrémité de liaison et d'emboîtement mâle ou femelle, dite première extrémité de liaison et d'emboîtement 1e, comprenant le premier moyen de liaison 1c ; 1d et, d'autre part, la deuxième partie 2 comprend ladite deuxième extrémité principale 2a et, du côté opposé à cette dernière, une extrémité de liaison et d'emboîtement mâle ou femelle, dite deuxième extrémité de liaison et d'emboîtement 2e, comprenant le deuxième moyen de liaison 2c; 2d, lesdites première et deuxième extrémités de liaison et d'emboîtement 1e, 2e étant complémentaires et emboîtées l'une dans l'autre.

Les perforations sont pratiquées dans sa paroi latérale 1b, 2b, de préférence sur toute la hauteur de ladite paroi latérale 1b, 2b, et/ou dans son fond 20a à travers ces derniers. De préférence, ces perforations sont très fines comme c'est le cas généralement des infuseurs amovibles actuels, par exemple de l'ordre de quelques dixièmes de millimètres, afin d'éviter le transfert de brisures du thé dans le liquide infusé. Les perforations sont réparties de façon uniforme sur la hauteur du corps principal 1, 2 et du fond 20a afin d'optimiser le transfert vers le liquide infusé se trouvant dans un récipient 3 prévu à cet effet en étant équipé d'un tel infuseur selon la présente invention (figure 6).

On comprend que la paroi latérale 1b, 2b de l'infuseur amovible est donc réalisée en deux parties, l'une 1b appartenant à la première partie 1 et l'autre 2b appartenant à la deuxième partie 2 du corps principal 1. Ces deux parois latérales, à l'état monté, s'étendent de préférence dans la continuité l'une de l'autre et peuvent présenter la même forme et/ou les mêmes dimensions, notamment le même diamètre.

Le corps principal 1, 2 peut être réalisé, de préférence, en inox ou tout autre matériau compatible d'un point de vue alimentaire.

La rigidité des parties 1, 2 démontables constituant le corps principal 1, 2 peut être garantie par l'épaisseur du métal perforé et/ou par des formes embouties.

Dans une forme de réalisation préférentielle de la localisation de la jonction L sur la hauteur du corps principal 1, 2 de l'infuseur amovible, comme on peut le voir sur les figures 1, 2 et 3, la jonction L peut être éloignée de la première extrémité principale 1a en étant située à proximité du fond 20a, de préférence à proximité immédiate dudit fond 20a, entre la mi-hauteur, ou la partie médiane, du corps principal 1, 2 et la ladite deuxième extrémité principale 2a fermée par le fond 20a. On comprend que la jonction L est plus proche du fond 20a que de l'ouverture 10a d'entrée ou, dans le cas où elle est située à proximité immédiate du fond 20a, juste à côté de ce dernier. Dans le cas où la jonction L est située à proximité immédiate du fond 20a, celle-ci est définie comme étant à pleine hauteur, par comparaison avec la jonction à mi-hauteur décrite ci-après. Dans ce dernier cas où la jonction L est située à proximité immédiate du fond 20a on peut considérer que le fond 20a, ou que la deuxième extrémité principale 2a fermée par ledit fond 20a, est démontable et que le nettoyage interne du corps principal 1, 2 de l'infuseur est facilité d'autant.

Dans une autre forme de réalisation de la localisation de la jonction L sur la hauteur de l'infuseur amovible, celle-ci, comme on peut le voir sur les figures 4 et 5, la jonction L peut être située sensiblement à mi-hauteur, ou sensiblement au niveau de la partie médiane, du corps principal 1, 2.

La liaison 1c, 2c ; 1d, 2d est configurée préférentiellement pour assurer une étanchéité empêchant toute fuite vers l'extérieur (de l'infuseur) de feuilles ou de brisures de plante(s) telles que par exemple du thé. A ce titre une liaison 1c, 2c ; 1d, 2d du type vissage ou encliquetage peut être choisie préférentiellement et convient parfaitement. Une liaison 1 c, 2c par vissage quart de tour est préférée. De telles liaisons 1c, 2c ; 1d, 2d par vissage ou encliquetage, sont décrites par la suite, selon différentes formes ou modes de réalisation du corps principal 1, 2 munie d'une telle liaison.

Dans un premier mode de réalisation de la liaison 1c, 2c, comme on peut le voir sur les figures 1, 2, 4 et 5, celle-ci est une liaison 1c, 2c par vissage, de préférence par vissage quart de tour, permettant le vissage, de préférence le vissage quart de tour, de la première partie 1 et de la deuxième partie 2 l'une sur l'autre autour de l'axe longitudinal X. Le premier moyen de liaison 1c et le deuxième moyen de liaison 2c consistent alors en des moyens de liaison par vissage.

Dans ce premier mode de réalisation par vissage, dans une première forme de réalisation où la première extrémité de liaison et d'emboîtement 1e est femelle et la deuxième extrémité de liaison et d'emboîtement 2e est mâle, comme on peut le voir sur les figures 1, 4 et 5, la première extrémité de liaison et d'emboîtement 1e femelle, de préférence de forme cylindrique, peut comporter un filetage interne formant le premier moyen de liaison 1c par vissage et la deuxième extrémité de liaison et d'emboîtement 2e mâle, de préférence de forme cylindrique, peut comporter un filetage externe formant le deuxième moyen liaison 2c par vissage.

Toujours dans ce premier mode de réalisation par vissage, dans une deuxième forme de réalisation où la première extrémité de liaison et d'emboîtement 1e est mâle et la deuxième extrémité de liaison et d'emboîtement 2e est femelle, comme on peut le voir sur la figure 2, la première extrémité de liaison et d'emboîtement 1e mâle, de préférence de forme cylindrique, peut comporter un filetage externe formant le premier moyen de liaison 1c par vissage et la deuxième extrémité de liaison et d'emboîtement 2e femelle, de préférence de forme cylindrique, peut comporter un filetage interne formant le deuxième moyen liaison 2c par vissage.

Dans un deuxième mode de réalisation de la liaison 1d, 2d, comme on peut le voir sur la figure 3, la liaison 1d, 2d est une liaison 1d, 2d par encliquetage permettant l'assemblage de la première partie 1 et de la deuxième partie 2 par emboîtage élastique réversible l'une dans l'autre, le premier moyen de liaison 1d et le deuxième moyen de liaison 2d consistant en des moyens de liaison par encliquetage. L'encliquetage est également connu, par exemple, sous les termes clipsage, emboîtement élastique ou en anglais Snap fit.

Dans ce deuxième mode de réalisation par encliquetage, dans une première forme de réalisation représentée sur la figure 3 où la première extrémité de liaison et d'emboîtement 1e est femelle et la deuxième extrémité de liaison 2e est mâle, la première extrémité de liaison et d'emboîtement 1e femelle, de préférence de forme cylindrique, comporte au moins une nervure interne d'encliquetage formant le premier moyen de liaison 1d par encliquetage et la deuxième extrémité de liaison et d'emboîtement 2e mâle, de préférence de forme cylindrique, comporte sur sa face externe au moins un ergot d'encliquetage formant le deuxième moyen de liaison 2d par encliquetage.

Dans ce deuxième mode de réalisation par encliquetage, dans une deuxième forme de réalisation non illustrée où la première extrémité de liaison et d'emboîtement 1e est mâle et la deuxième extrémité de liaison et d'emboîtement 2e est femelle, la première extrémité de liaison et d'emboîtement 1e mâle, de préférence de forme cylindrique, comporte au moins un ergot d'encliquetage formant le premier moyen de liaison 1d par encliquetage et la deuxième extrémité de liaison et d'emboîtement 2e femelle, de préférence de forme cylindrique, comporte au moins une nervure interne d'encliquetage formant le deuxième moyen de liaison 2d par encliquetage.

Les ergots ou nervures d'encliquetages dans ce deuxième mode de réalisation par encliquetage, sont des moyens d'encliquetage à titre d'exemple et tout autre élément ou relief présentant des surfaces de contact configurées pour permettre un tel encliquetage peut être choisi. Pour permettre la réversibilité, c'est-à-dire pour rendre possible l'assemblage et le démontage du corps principal 1, 2 en deux parties, la présente invention peut prévoir que ces moyens d'encliquetage et/ou la ou les parois les comportant soient, au niveau de l'une et/ou l'autre des deux parties 1, 2, déformables élastiquement et/ou utilisent des surfaces de contact normales et/ou inclinées par rapport au sens du mouvement d'emboîtement et/ou arrondies.

L'infuseur amovible selon la présente invention peut comprendre un élément d'appui 1f permettant de suspendre verticalement ledit infuseur amovible dans le récipient infuseur de sorte que la première partie 1 soit située au-dessus de la deuxième partie 2 (figure 6). L'élément d'appui 1f peut se présenter, par exemple, sous la forme d'une collerette s'étendant radialement de la face externe du corps principal 1, 2, c'est-à-dire de sa première partie 1, de préférence au niveau de la première extrémité principale 1a. L'élément d'appui 1f peut ainsi reposer ou être supporté sur une surface support, telle que le bord de l'ouverture du récipient infuseur.

La présente invention peut en outre prévoir un élément de préhension ou une zone de préhension de l'infuseur amovible permettant de saisir ce dernier et de le retirer du récipient 3 équipé d'un tel infuseur amovible ou facilitant un tel retrait. Dans une forme de réalisation particulière, l'élément d'appui 1f peut former une base de fixation de l'élément de préhension ou de la zone de préhension.

Enfin la présente invention peut prévoir que l'infuseur amovible comprenne un couvercle 3d fermant l'ouverture 10a du corps principal 1, 2. Un tel couvercle 3d peut alors également former le couvercle du récipient infuseur équipé d'un tel infuseur amovible (figure 6). Un tel couvercle permet de réduire tout échappement thermique dans le cas d'un liquide d'infusion chaud.

Si on se réfère à la figure 6, on peut voir que la présente invention a également pour objet un récipient infuseur équipé d'un infuseur amovible à thé ou autre plante pour infusion, ledit récipient comprenant un récipient 3 et un infuseur amovible.

Conformément à la présente invention, dans un tel récipient, l'infuseur amovible est un infuseur amovible selon la présente invention.

Si on se réfère à nouveau à la figure 6, on peut voir que le récipient 3 du récipient infuseur peut présenter, par exemple, une forme de cruche ou de pichet et peut comprendre une anse 3c pour sa préhension et un bec 3b pour verser le liquide infusé au moyen de l'infuseur amovible.

L'infuseur amovible peut être inséré et maintenu verticalement en suspension, de préférence centralement, dans l'espace interne du récipient 3 en reposant, par exemple, par son élément d'appui 1f décrit précédemment, sur le bord de l'ouverture 3a du récipient ou sur une pièce intermédiaire, non représentée sur les figures annexées, positionnée dans l'ouverture 3a du récipient 3. On comprend alors que la première partie 1 est située au-dessus de la deuxième partie 2 du corps principal 1, 2 de l'infuseur amovible ainsi suspendu.

Un tel infuseur amovible démontable selon la présente invention permet un accès plus aisé dans son espace interne recevant la plante à infuser, ce qui facilite le nettoyage et notamment l'enlèvement des feuilles et brisures qui se retrouvent écrasées ou concentrées dans le fond de l'infuseur et/ou sur les parois internes, et le cas échéant dans les perforations. Un tel infuseur amovible permet un nettoyage plus efficace.

La forme et la contenance du récipient 3, tel qu'un pichet, détermine le diamètre et la hauteur de l'infuseur amovible. Comme c'est le cas généralement, un tel infuseur amovible peut présenter un diamètre de l'ordre de 4 à 8 cm, de préférence de l'ordre de 6cm, et une hauteur de 10 à 20 cm, de préférence de l'ordre de 15 cm.

Dans un mode de réalisation non représentée de la liaison, la présente invention peut également prévoir que la liaison entre les deux parties 1 et 2 du corps principal 1, 2 soit une liaison magnétique, lesdites deux parties 1 et 2 du corps principal 1, 2 étant alors reliées et maintenues entre elles par des moyens de fixation magnétiques tels qu'au moins un aimant monté dans l'extrémité de liaison et d'emboîtement 1e, 2e mâle ou femelle de l'une desdites parties 1 ou 2 et une contrepartie métallique, telle qu'au moins un élément métallique ou au moins une surface métallique, rapporté(e) ou intégré(e) ou appliqué(e) dans l'extrémité de liaison et d'emboîtement 1e, 2e mâle ou femelle de l'autre partie 1 ou 2, coopérant, par contact et attraction magnétique, avec ledit au moins un aimant.

La ou chaque plante infusée contenue dans l'espace interne du corps principal 1, 2 de l'infuseur peut être en vrac ou conditionnée en sachet. La ou chaque plante peut être, par exemple, du thé, une plante aromatique, des pétales de fleurs séchées, des morceaux de fruits séchés ou de la badiane.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Infuseur amovible à thé ou autre plante pour infusion apte et destiné à équiper un récipient infuseur, ledit infuseur comprenant un corps principal (1, 2) creux et perforé, préférentiellement de forme cylindrique, s'étendant le long d'un axe longitudinal (X) entre deux extrémités principales opposées (1a, 2a) dudit corps principal (1, 2), à savoir une première extrémité principale (1a) et une deuxième extrémité principale (2a), reliées entre elles par une paroi latérale (1b, 2b), la première extrémité principale (1a) étant ouverte par une ouverture (10a) permettant l'insertion d'au moins une plante à infuser dans l'espace interne dudit corps principal (1, 2) et la deuxième extrémité principale (2a) étant fermée par un fond (20a) permettant de retenir ladite plante dans ledit corps principal (1, 2), **caractérisé en ce que** ledit corps principal (1, 2) comprend une liaison (1c, 2c; 1d, 2d) démontable et est constitué de deux parties (1, 2), à savoir une première partie (1) et une deuxième partie (2), assemblées l'une à l'autre de manière démontable, grâce à ladite liaison (1c, 2c; 1d, 2d), au niveau d'une jonction (L) située entre lesdites première et deuxième extrémités principales (1a, 2a), ladite liaison (1c, 2c; 1d, 2d) comprenant un premier moyen de liaison (1c; 1d) et un deuxième moyen de liaison (2c; 2d) coopérant mutuellement par contact et **en ce que**, d'une part, la première partie (1) comprend la première extrémité principale (1a) et, du côté opposé à cette dernière, une extrémité de liaison et d'emboîtement mâle ou femelle, dite première extrémité de liaison et d'emboîtement (1e), comprenant le premier moyen de liaison (1c; 1d) et, d'autre part, la deuxième partie (2) comprend ladite deuxième extrémité principale (2a) et, du côté opposé à cette dernière, une extrémité de liaison et d'emboîtement (2e) mâle ou femelle, dite deuxième extrémité de liaison et d'emboîtement (2e), comprenant le deuxième moyen de liaison (2c; 2d), lesdites première et deuxième extrémités de liaison et d'emboîtement (1e, 2e) étant complémentaires et emboîtées l'une dans l'autre.

2. Infuseur amovible, selon la revendication 1, **caractérisé en ce que** la jonction (L) est éloignée de la première extrémité principale (1a) en étant située à proximité du fond (20a), de préférence à proximité immédiate dudit fond (20a), entre la mi-hauteur, ou la partie médiane, du corps principal (1, 2) et la ladite deuxième extrémité principale (2a) fermée par le fond (20a).

3. Infuseur amovible, selon la revendication 1 ou la revendication 2, **caractérisé en ce que** la jonction (L) est située sensiblement à mi-hauteur, ou sensiblement au niveau de la partie médiane, du corps principal (1, 2).

4. Infuseur amovible, selon l'une quelconque des revendications 1 à 3, **caractérisé en ce que** la liaison (1c, 2c ; 1d, 2d) est configurée pour assurer une étanchéité empêchant toute fuite vers l'extérieur de feuilles ou de brisures de plante(s).

5. Infuseur amovible, selon l'une quelconque des revendications 1 à 4, **caractérisé en ce que** la liaison (1c, 2c) est une liaison (1c, 2c) par vissage permettant le vissage de la première partie (1) et de la deuxième partie (2) l'une sur l'autre autour de l'axe longitudinal (X), le premier moyen de liaison (1c) et le deuxième moyen de liaison (2c) consistant en des moyens de liaison par vissage.

6. Infuseur amovible, selon la revendication 5, **caractérisé en ce que** la première extrémité de liaison et d'emboîtement (1e) femelle, de préférence de forme cylindrique, peut comporter un filetage interne formant le premier moyen de liaison (1c) par vissage et la deuxième extrémité de liaison et d'emboîtement (2e) mâle, de préférence de forme cylindrique, peut comporter un filetage externe formant le deuxième moyen liaison (2c) par vissage.

7. Infuseur amovible, selon la revendication 5, **caractérisé en ce que** la première extrémité de liaison et d'emboîtement (1e) mâle, de préférence de forme cylindrique, peut comporter un filetage externe formant le premier moyen de liaison (1c) par vissage et la deuxième extrémité de liaison et d'emboîtement (2e) femelle, de préférence de forme cylindrique, peut comporter un filetage interne formant le deuxième moyen liaison (2c) par vissage.

8. Infuseur amovible, selon l'une quelconque des revendications 1 à 4, caractérisé en que la liaison (1d, 2d) est une liaison (1d, 2d) par encliquetage permettant l'assemblage de la première partie (1) et de la deuxième partie (2) par emboîtage élastique réversible l'une dans l'autre, le premier moyen de liaison (1d) et le deuxième moyen de liaison (2d) consistant en des moyens de liaison par encliquetage.

9. Infuseur amovible, selon l'une quelconque des revendications 1 à 4, caractérisé en que la liaison est une liaison magnétique, les deux parties (1, 2) du corps principal (1, 2) étant reliées et maintenues entre elles à l'état assemblé par des moyens de fixation magnétiques tels qu'au moins un aimant monté dans l'extrémité de liaison et d'emboîtement (1e, 2e) mâle ou femelle de l'une desdites parties (1, 2), et une contrepartie métallique telle qu'au moins un élément métallique ou au moins une surface métallique, rapporté(e) ou intégré(e) ou appliqué(e) dans l'extrémité de liaison et d'emboîtement (1e, 2e) mâle ou femelle de l'autre partie (1, 2), coopérant par contact et attraction magnétique avec ledit au moins un aimant.

10. Récipient infuseur équipé d'un infuseur amovible à thé ou autre plante pour infusion, ledit récipient comprenant un récipient (3) et un infuseur amovible, **caractérisé en ce que** ledit infuseur amovible est un infuseur amovible selon l'une quelconque des revendications 1 à 9.
